# EUROPÄISCHE PATENTSCHRIFT

(11) **EP 1 183 123 B1**
(45) Veröffentlichungstag und Bekanntmachung des Hinweises auf die Patenterteilung: **26.03.2003**
(21) Anmeldenummer: 00940341.1
(22) Anmeldetag: 07.06.2000
(51) Int. Cl.: B23B 31/02

(54) **SPANNFUTTER ZUM SPANNEN VON WERKZEUGEN**
CLAMPING CHUCK FOR CLAMPING TOOLS
MANDRIN DE SERRAGE DESTINE AU SERRAGE D'OUTILS

(30) Priorität: 09.06.1999 DE 19926209
(43) Veröffentlichungstag der Anmeldung: 06.03.2002
(73) Patentinhaber: Schunk GmbH & Co. KG Fabrik für Spann- und Greifwerkzeuge, 74348 Lauffen (DE)
(72) Erfinder: RETZBACH, Thomas, D-74357 Bönnigheim (DE); KERSTEN, Ralph, D-74078 Heilbronn (DE)
(74) Vertreter: Paul, Dieter-Alfred, Dipl.-Ing.
(86) Internationale Anmeldenummer: EP0005243
(87) Internationale Veröffentlichungsnummer: WO00076703

(56) Entgegenhaltungen:
- EP-A- 1 004 378
- US-A- 5 311 654
- US-A- 5 873 687
- PATENT ABSTRACTS OF JAPAN vol. 012, no. 208 (M-709), 15. Juni 1988 (1988-06-15) & JP 63 011242 A (TECH RES ASSOC HIGHLY RELIAB MARINE PROPUL PLANT), 18. Januar 1988 (1988-01-18)

## Beschreibung

Die vorliegende Erfindung betrifft ein Spannfutter zum Spannen von Werkzeugen durch Schrumpfsitz mit einem an der Arbeitsspindel einer Werkzeugmaschine fixierbaren Futterkörper, in dem eine zentrale Aufnahme für den Schaft eines zu spannenden Werkzeugs ausgebildet ist.

Die US-A-5311 654 offenbart ein derartiges Spannfutter.

Spannfutter dieser Art sind in unterschiedlichen Ausführungsformen bekannt und dienen dazu, einen Werkzeugschaft wie beispielsweise einen Bohrer- oder Fräserschaft in der Arbeitsspindel einer entsprechenden Werkzeugmaschine zu fixieren. Sie werden insbesondere eingesetzt, um kleine Werkzeuge zu spannen.

Die herkömmlichen Spannfutter zum Spannen von Werkzeugen durch Schrumpfsitz bestehen in der Regel aus einem Futterkörper aus Metall, der an der Arbeitsspindel der jeweiligen Werkzeugmaschine angebracht werden kann und eine zentrale Aufnahme für den Schaft des zu spannenden Werkzeugs aufweist. Der Durchmesser der Aufnahme ist dabei so bestimmt, daß er etwas kleiner ist als der Durchmesser des Werkzeugschaftes. Zum Spannen des Werkzeugs wird der Futterkörper zumindest im Bereich der Aufnahme erwärmt, bis sich diese soweit thermisch gedehnt hat, daß der Werkzeugschaft in sie eingesetzt werden kann. Beim anschließenden Abkühlen schrumpft die Aufnahme wieder, so daß der Werkzeugschaft in der Aufnahme durch Preß- oder Schrumpfsitz fixiert wird.

Solche sogenannten Wärmeschrumpffutter haben sich zwar in der Praxis durchaus bewährt. Aufgrund der harten Einspannung des Schaftes können im Gebrauch jedoch Abwalkeffekte, die bis zum Bruch des Vollhartmetallschaftes des Werkzeugs führen können, auftreten.

Aufgabe der Erfindung ist es daher, ein Spannfutter der eingangs genannten Art so auszubilden, daß im Betrieb Abwalkeffekte am Werkzeugschaft zumindest weitgehend verhindert werden.

Diese Aufgabe ist erfindungsgemäß dadurch gelöst, daß in dem Futterkörper ein die Aufnahme umgebender Dämpfungsringraum vorgesehen ist oder in dem Futterkörper um die Aufnahme herum verteilt und mit Versatz zueinander angeordnete Dämpfungshohlräume ausgebildet sind. Durch die erfindungsgemäß im Bereich der Aufnahme vorgesehenen Hohlräume wird die Einspannung des Werkzeugschaftes "weicher" mit der Folge, daß die im Stand der Technik aufgrund der harten Einspannung des Schaftes auftretenden "Kardaneffekte", die zum Werkzeugbruch führen können, ausgeschlossen bzw. weitgehend verhindert werden können.

Gemäß einer Ausführungsform der Erfindung ist vorgesehen, daß der Dämpfungsringraum als umlaufende Axialnut ausgebildet ist, die insbesondere zur werkzeugseitigen Stirnfläche des Futterkörpers offen sein kann. Sofern alternativ um die Aufnahme herum mehrere Dämpfungshohlräume vorgesehen sind, können diese als Axialbohrungen oder Axialnuten ausgebildet sein, die dann zweckmäßigerweise ebenfalls zur werkzeugseitigen Stirnfläche des Futterkörpers offen sind, so daß sie leicht hergestellt werden können. Die offene Gestaltung des Dämpfungsringraums bzw. der Dämpfungshohlräume bietet weiterhin die Möglichkeit, in die Räume ein geeignetes Dämpfungsmaterial wie beispielsweise Metall oder Kunststoff einzubringen, das einen kleineren E-Modul als das Material des Futterkörpers hat.

Gemäß einer weiteren Ausführungsform der Erfindung ist vorgesehen, daß der Dämpfungsringraum zur Aufnahme hin offen ist und in den Dämpfungsringraum eine mit dem Schaft des zu spannenden Werkstücks in Kontakt kommende Dämpfungsbuchse eingesetzt ist, wobei der E-Modul der Dämpfungsbuchse kleiner ist als der E-Modul des Futterkörpers. Insbesondere kann die Dämpfungsbuchse aus Aluminium, Kunststoff oder dergleichen bestehen. Die Verwendung einer derartigen Dämpfungsbuchse bzw. die Verfüllung der Dämpungfsräume mit einem schwingungsdämpfenden Material erzeugt eine Abstützung des vorderen Bereichs des Futterkörpers, so daß ein sicherer Halt eines Werkstücks in der Aufnahme gewährleistet werden kann.

Im übrigen können in dem Futterkörper zur Aufnahme hin offene Freisparungen am werkzeugseitigen Endbereich der Aufnahme und/oder am spindelseitigen Endbereich der Aufnahme vorgesehen sein, durch die sich der Spannbereich eindeutig festlegen läßt.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt
- Figur 1: im Längsschnitt eine Ausführungsform eines Spannfutters gemäß der vorliegenden Erfindung mit axialen Dämpfungsbohrungen,
- Figur 2: das Spannfutter aus Figur 1 in Vorderansicht,
- Figur 3: im Längsschnitt ein Spannfutter gemäß der vorliegenden Erfindung mit einem geschlossenen Dämpfungsringraum,
- Figur 4: im Längsschnitt ein Spannfutter gemäß der vorliegenden Erfindung mit einem zur werkzeugseitigen Stirnfläche des Futterkörpers offenen Dämpfungsringraum,
- Figur 5: das Spannfutter aus Figur 4 mit einem verfüllten Dämpfungsringraum und
- Figur 6: eine Ausführungsform eines Spannfutters gemäß der vorliegenden Erfindung mit einer Dämpfungsbuchse.

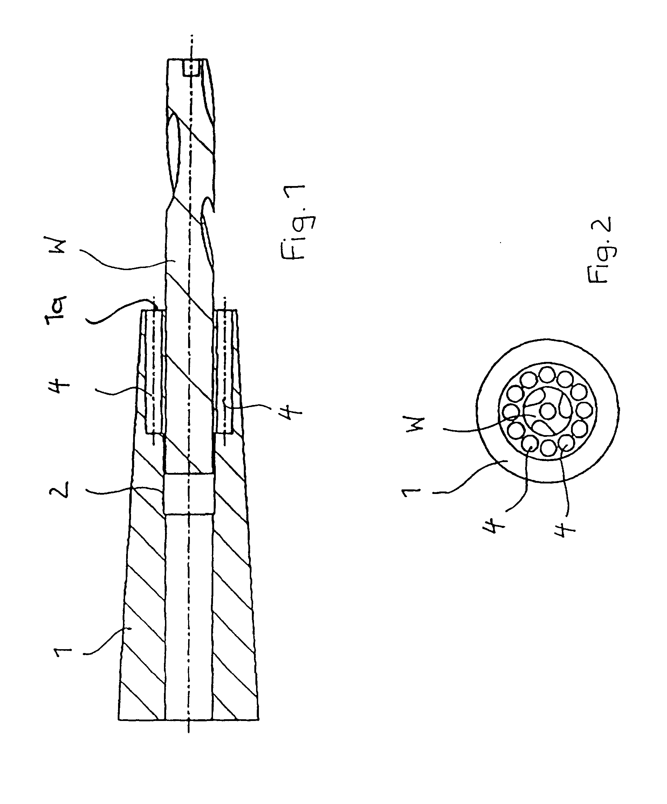

In den Figuren 1 und 2 ist eine erste Ausführungsform eines Spannfutters zum Spannen von Werkzeugen durch Schrumpfsitz gemäß der vorliegenden Erfindung im Längsschnitt dargestellt. Das Spannfutter umfaßt einen Futterkörper 1 aus einem formsteifen Material - hier Stahl -, der an seinem einen Endbereich eine zentrale Aufnahme 2 aufweist, in die nach einer Erwärmung und der damit verbundenen Aufweitung der Aufnahme 2 ein zylindrischer Schaft eines Werkzeugs W wie beispielsweise eines Bohrers oder Fräsers eingeschoben werden kann, und der an seinem anderen Endbereich in an sich bekannter Weise in eine drehangetriebene Arbeitsspindel einer Werkzeugmaschine einspannbar ist.

Erfindungsgemäß sind in dem Futterkörper 1 eine Mehrzahl von Axialbohrungen 4 vorgesehen, die gleichmäßig verteilt um die Aufnahme 2 herum angeordnet und zur werkzeugseitigen Stirnfläche 1a des Futterkörpers 1 offen sind. Durch diese Dämpfungsbohrungen 4 wird erreicht, daß der Futterkörper 1 im Bereich der Einspannstelle weicher wird, so daß im Betrieb auftretende Schwingungen gedämpft werden. Hierdurch können Brüche des Werkzeugschaftes, die bei herkömmlichen Futtern aufgrund der harten Einspannung und der damit verbundenen Kardaneffekte auftraten, verhindert werden.

Die Dämpfungsbohrungen 4, die sich über einen axialen Teilbereich der Aufnahme 2 erstrecken können auch mit einem geeigneten Dämpfungsmaterial verfüllt sein, wodurch der Werkzeugschaft eine zusätzliche Abstützung erfährt.

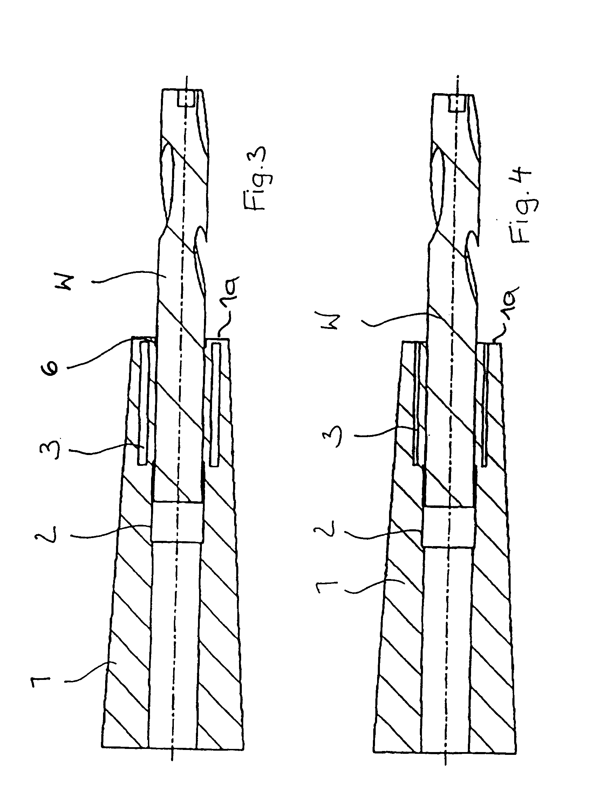

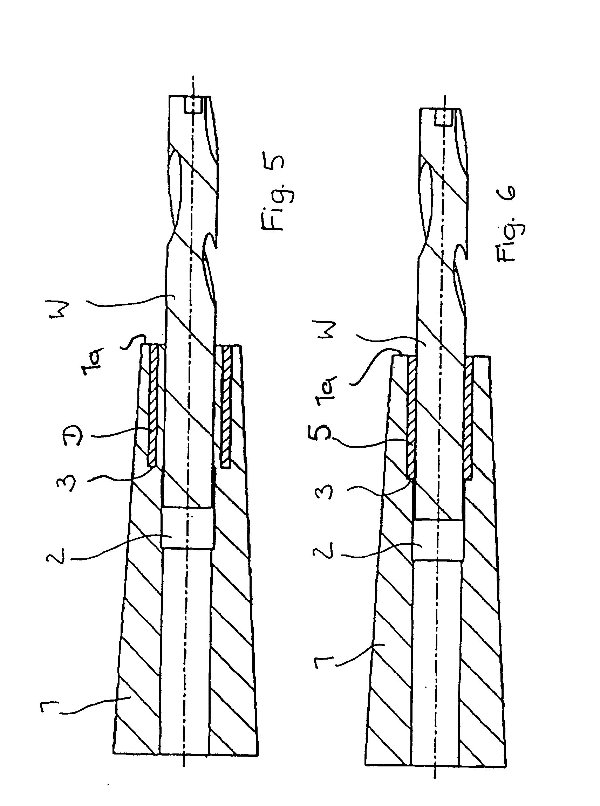

Bei den in den Figuren 3 und 4 dargestellten Ausführungsformen ist anstelle der Dämpfungsbohrungen 4 jeweils ein Dämpfungsringraum 3 vorgesehen, der die Aufnahme 2 vollständig umgibt und sich über einen axialen Teilbereich von dieser erstreckt. Die Dämpfungsringnut 3 ist im Falle der Ausführungsform der Figur 3 geschlossen und im Falle der Ausführungsform der Figur 4 zur werkzeugseitigen Stirnfläche 1a des Futterkörpers 1 offen ausgebildet. Die offene Ausbildung bietet den Vorteil, daß der Dämpfungsringraum 3 einerseits einfach herzustellen ist und andererseits mit einem geeigneten Dämpfungsmaterial, das einen niedrigeren E-Modul als das Material des Futterkörpers 1 aufweist, verfüllt werden kann wie dies in Figur 5 angedeutet ist.

Die Dämpfungsringnut 3 kann auch, wie dies in Figur 6 gezeigt ist, zur Aufnahme 2 hin offen sein, wobei dann eine Dämpfungsbuchse in die Dämpfungsringnut 3 eingesetzt werden muß, welche einerseits steif genug ist, um ein in die Aufnahme 2 eingesetztes Werkstück W ausreichend stabil einzuspannen, und andererseits noch dämpfend wirkt.

Schließlich können in dem Futterkörper 1 zur Aufnahme hin offene Freisparungen 6 am werkzeugseitigen und/oder spindelseitigen Endbereich der Aufnahme 2 vorgesehen sein, um den Spannbereich klar zu definieren (siehe Figur 3).

## Patentansprüche

1. Spannfutter zum Spannen von Werkzeugen durch Schrumpfsitz mit einem an der Arbeitsspindel einer Werkzeugmaschine fixierbaren Futterkörper (1), in dem eine zentrale Aufnahme (2) für den Schaft eines zu spannenden Werkzeugs (W) ausgebildet ist, **dadurch gekennzeichnet, daß** in dem Futterkörper (1) ein die Aufnahme (2) umgebender Dämpfungsringraum (3) vorgesehen ist oder in dem Futterkörper (1) um die Aufnahme (2) herum verteilt und mit Versatz zueinander angeordnete Dämpfungshohlräume (4) ausgebildet sind.

2. Spannfutter nach Anspruch 1, **dadurch gekennzeichnet, daß** der Dämpfungsringraum (3) als umlaufende Axialnut ausgebildet ist.

3. Spannfutter nach Anspruch 1, **dadurch gekennzeichnet, daß** die Dämpfungshohlräume als Axialbohrungen (4) ausgebildet sind.

4. Spannfutter nach Anspruch 1, **dadurch gekennzeichnet, daß** die Dämpfungshohlräume als axiale Nuten (5) ausgebildet sind.

5. Spannfutter nach einem der vorherigen Ansprüche, **dadurch gekennzeichnet, daß** sich der Dämpfungsringraum (3) bzw. die Dämpfungshohlräume (4) entlang eines axialen Teilbereichs der Aufnahme (2) erstrecken.

6. Spannfutter nach einem der vorherigen Ansprüche, **dadurch gekennzeichnet, daß** der Dämpfungsringraum (3) bzw. die Dämpfungshohlräume (4) zur werkstückseitigen Stirnfläche (la) des Futterkörpers (1) offen ist bzw. sind.

7. Spannfutter nach einem der vorherigen Ansprüche, **dadurch gekennzeichnet, daß** der Dämpfungsringraum (3) bzw. die Dämpfungshohlräume (4) mit einem Dämpfungsmaterial (D) verfüllt ist bzw. sind.

8. Spannfutter nach Anspruch 7, **dadurch gekennzeichnet, daß** das dämpfende Material (D) ein Metall oder Kunststoff ist.

9. Spannfutter nach einem der vorherigen Ansprüche, **dadurch gekennzeichnet, daß** der Dämpfungsringraum (3) zur Aufnahme (2) hin offen ist und in den Dämpfungsringraum (3) eine mit dem Schaft des zu spannenden Werkstücks (W) in Kontakt kommende Dämpfungsbuchse (5) eingesetzt ist, wobei der E-Modul der Dämpfungsbuchse (5) kleiner ist als der E-Modul des Futterkörpers (1).

10. Spannfutter nach Anspruch 8, **dadurch gekennzeichnet, daß** die Dämpfungsbuchse (5) als Aluminium, Kunststoff oder Stahl besteht.

11. Spannfutter nach einem der Ansprüche 1 bis 8, **dadurch gekennzeichnet, daß** in dem Futterkörper (1) zur Aufnahme (2) hin offene Freisparungen (6) am werkzeugseitigen Endbereich der Aufnahme (2) und/oder am spindelseitigen Endbereich der Aufnahme (2) vorgesehen sind.

## Claims

1. A chuck to clamp tools by shrink-fitting, comprising a chuck body (1) affixable to a work spindle of a machine tool, said body subtending in it a central seat (2) to receive the shank of a tool (W) to be clamped,
**characterized in that**
an annular damping chamber (3) enclosing the seat (2) is present in the chuck body (1), or **in that** damping cavities (4) are configured in distributed and mutually offset mariner around the seat (2) in the body (1).

2. Chuck as claimed in claim 1, **characterized in that** the annular damping chamber (3) is in the form of an axial, circumferential channel.

3. Chuck as claimed in claim 1, **characterized in that** the damping cavities are in the form of axial boreholes (4).

4. Chuck as claimed in claim 1, **characterized in that** the damping cavities are in the form of axial channels (5).

5. Chuck as claimed in one of the above claims, **characterized in that** the annular damping chamber (3) or the damping cavities (4) run along an axial segment of the seat (2).

6. Chuck as claimed in one of the above claims, **characterized in that** the annular damping chamber (3) or the damping cavities (4) is/are open toward the tool-side end face (1a) of the chuck case (1).

7. Chuck as claimed in one of the above claims, **characterized in that** the annular damping chamber (3) or the damping cavities (4) is/are filled with a damping material (D).

8. Chuck as claimed in claim 7, **characterized in that** the damping material (D) is a metal or a plastic.

9. Chuck as claimed in one of the above claims, **characterized in that** the annular damping chamber (3) is open toward the seat (2) and **in that** a damping bush (5) making contact with the tool (W) to be clamped is inserted into the annular damping chamber (3), the Young's modulus of the damping bush (5) being less than that of the chuck body (1).

10. Chuck as claimed in claim 8, **characterized in that** the damping bush (5) consists of aluminum, plastic or steel.

11. Chuck as claimed in one of claims 1 through 8, **characterized in that** free recesses (6) open toward the seat (2) are present in the chuck body (1) at the tool-side end zone of the seat (2) and/or at the spindle-side end zone of the seat (2).

## Revendications

1. Mandrin de serrage pour serrer des outils à l'aide d'un maintien à rétrécissement au moyen d'un corps de mandrin (1) susceptible d'être fixé sur l'arbre de travail d'une machine-outil, dans lequel corps est réalisé une réception centrale (2) pour la tige d'un outil (W) à serrer, **caractérisé en ce que** l'on a prévu dans le corps de mandrin (1) une chambre annulaire d'amortissement (3) entourant la réception (2) ou **en ce que** l'on a réalisé des cavités d'amortissement (4) dans le corps de mandrin (1) reparties autour de la réception (2) et disposées de façon décalée l'une par rapport à l'autre.

2. Mandrin de serrage selon la revendication 1, **caractérisé en ce que** l'on a réalisé la chambre annulaire d'amortissement (3) en tant que rainure axiale circonférentielle.

3. Mandrin de serrage selon la revendication 1, **caractérisé en ce que** l'on a réalisé des cavités d'amortissement en tant qu'alésages axiaux (4).

4. Mandrin de serrage selon la revendication 1, **caractérisé en ce que** l'on a réalisé des cavités d'amortissement en tant que rainures axiales (5).

5. Mandrin de serrage selon une des revendications précédentes, **caractérisé en ce que** la chambre annulaire d'amortissement (3) ou les cavités d'amortissement (4) s'étendent le long d'une zone partielle axiale de la réception (2).

6. Mandrin de serrage selon une des revendications précédentes, **caractérisé en ce que** la chambre annulaire d'amortissement (3) ou les cavités d'amortissement (4) est ou sont ouverts (s) vers la surface frontale (1a) du corps de mandrin (1) située du coté de la pièce à usiner.

7. Mandrin de serrage selon une des revendications précédentes, **caractérisé en ce que** la chambre annulaire d'amortissement (3) ou les cavités d'amortissement (4) est ou sont remplie (s) d'un matériau d'amortissement.

8. Mandrin de serrage selon la revendication 7, **caractérisé en ce que** le matériau d'amortissement (D) est un métal ou une matière plastique.

9. Mandrin de serrage selon une des revendications précédentes, **caractérisé en ce que** la chambre annulaire d'amortissement (3) est ouverte vers la réception (2) et qu'on a inséré dans la chambre annulaire d'amortissement (3) une douille d'amortissement (5) venant en contact avec la tige de l'outil (W) à serrer, où le module de l'élasticité E de la douille d'amortissement (5) est plus petit que le module d'élasticité E du corps de mandrin (1).

10. Mandrin de serrage selon la revendication 8, **caractérisé en ce que** la douille d'amortissement (5) est constituée d'aluminium, de matière plastique ou d'acier.

11. Mandrin de serrage selon une des revendications 1 à 8, **caractérisé en ce qu'**on a prévu dans le corps de mandrin (1), dans la zone terminale, du coté de l'outil, de la réception (2) et / ou dans la zone terminale, du coté de l'arbre de la machine-outil, du coté de la réception (2), des évidements (6) ouverts vers la réception (2).
